# FASCICULE DE BREVET EUROPEEN

(11) **EP 2 844 490 B1**
(45) Date de publication et mention de la délivrance du brevet: **05.10.2016**
(21) Numéro de dépôt: 13724184.0
(22) Date de dépôt: 02.05.2013
(51) Int. Cl.: B41J 2/21, B41J 25/308, B41J 2/045

(54) **PROCÉDÉ DE VÉRIFICATION DE L'ALIGNEMENT DE TÊTES D'IMPRESSION ET MÉTHODE D'ALIGNEMENT ASSOCIÉE**
VERFAHREN ZUR ÜBERPRÜFUNG DER AUSRICHTUNG VON DRUCKKÖPFEN UND ZUGEHÖRIGE AUSRICHTUNGSVERFAHREN
METHOD FOR CHECKING THE ALIGNMENT OF PRINT HEADS AND ASSOCIATED ALIGNMENT METHOD

(30) Priorité: 03.05.2012 FR 1254068
(43) Date de publication de la demande: 11.03.2015
(73) Titulaire: MGI FRANCE, 94260 Fresnes (FR)
(72) Inventeur: ABERGEL, Edmond, F-75012 Paris (FR); PONCET, Romain, F-94200 Ivry Sur Seine (FR); BRIONNE, Thierry, F-94200 Ivry Sur Seine (FR)
(74) Mandataire: Debay, Yves
(86) Numéro de dépôt international: PCT/EP2013/059154
(87) Numéro de publication internationale: WO 2013/164408

(56) Documents cités:
- US-A1- 2004 207 674
- US-A1- 2011 007 371
- US-A1- 2011 169 893

## Description

### DOMAINE TECHNIQUE DE L'INVENTION

La présente invention se rapporte aux procédés d'ajustement de points et/ou motifs imprimés sur un substrat quelconque, et plus particulièrement de l'association de tels procédés avec des méthodes d'alignement de systèmes mécaniques.

### ARRIERE-PLAN TECHNOLOGIQUE DE L'INVENTION

L'alignement de systèmes comprenant une partie mécanique est un problème apparu en même temps que les systèmes eux-mêmes. De façon connue en soi, des méthodes d'ajustement numériques permettant notamment de mettre en équation des points expérimentaux existent et trouvent des applications dans des domaines où l'alignement précis des systèmes composant une machine ou un dispositif est essentiel.

A titre d'exemple, citons le domaine de l'impression et notamment les machines comprenant une pluralité de têtes d'impression. En effet, la diversité des applications engendrées par les possibilités de ces machines nécessitent la plupart du temps la présence de plusieurs têtes d'impression au sein d'une même machine. Mais ces têtes, afin que le fonctionnement de la machine d'impression soit optimal, doivent être alignées avec une précision proche de la résolution de l'impression, ce qui implique des ajustements micrométriques. Ainsi, l'ajustement grâce à des méthodes numériques prend tout son sens.

De nombreuses méthodes réduisant les artefacts liés à un mauvais alignement de systèmes mécaniques dépendant les uns des autres sont décrites dans l'art antérieur.

Citons notamment le document WO 2005/039881 dans lequel est divulguée une méthode d'alignement de têtes d'impression comprenant chacune une pluralité de buses. Afin de réaliser un motif qui servira à l'alignement des têtes, chaque tête d'impression imprime sur un substrat une série de gouttes. Après acquisition et numérisation de ce motif, des moyens informatiques calculent la distance entre chaque série de points et la compare à une distance idéale, caractéristique d'un alignement optimal entre les têtes. Le résultat de cette comparaison sert de base pour l'alignement des têtes d'impression par rapport à une tête de référence. Cependant, cette méthode d'ajustement numérique est réalisée sur des marques d'impression ponctuelles.

Le document US 2004/0207674 divulgue un procédé de vérification de l'alignement des têtes d'impression sur une machine d'impression, par un ajustement linéaire d'au moins un groupe de points représentés sur une image issue de la numérisation d'un modèle comprenant une pluralité de gouttes imprimées.

Citons également le document US 2011/0169893, qui divulgue une machine d'impression jet d'encre comprenant des moyens d'ajustement, de l'alignement du substrat. Au moins une tête d'impression réalise un motif composé de points spécifiques, ledit motif étant par la suite numérisé grâce à des moyens d'acquisition compris dans la machine d'impression. Cette image numérique est ensuite analysée, la position des points étant comparée à la position de points dans le cadre d'un alignement optimal. Le résultat de cette comparaison sert de base pour l'alignement du substrat à l'aide de moyens d'ajustement. Cependant, et comme précédemment, la méthode d'ajustement numérique est réalisée sur des marques d'impression ponctuelles. D'autre part, il ne s'agit pas d'aligner les têtes d'impression, mais le substrat d'impression,

### DESCRIPTION GENERALE DE L'INVENTION

La présente invention a pour objet de proposer une méthode d'évaluation et de correction de l'alignement de têtes d'impression réalisée à l'aide d'au moins un algorithme d'ajustement, permettant une précision plus grande dans son utilisation en s'affranchissant des imprécisions liées à l'éjection des gouttes des têtes d'impression, tout en limitant l'utilisation des ressources du système informatique sur lequel la méthode est utilisée. D'autre part, le nombre de têtes d'impression dont l'alignement doit être évalué et éventuellement corrigé a très peu d'influence sur le temps de traitement global imposé par ladite méthode.

A cet effet, l'invention concerne un procédé de vérification de l'alignement d'au moins une tête d'impression installée sur une machine d'impression, par ajustement linéaire d'au moins un groupe de points représentés sur une image issue de la numérisation d'un modèle comprenant une pluralité de gouttes imprimées, caractérisé en ce que chaque goutte comporte une pluralité de points, chaque point ayant une teinte uniforme conforme à une base de données colorimétrique sauvegardée dans une zone mémoire d'un système informatique mettant en oeuvre le procédé et comprenant au moins un espace mémoire, dés moyens d'acquisition, d'enregistrement et de traitement des données, le procédé comprenant :
a. une étape de détection de la couleur des points par les moyens de traitement, suivi de l'attribution par les moyens de traitement de coordonnées spatiales et de coordonnées colorimétriques à chaque point d'une image numérique d'un modèle enregistrée en mémoire, ces coordonnées étant respectivement associées à un repère spatial relatif à l'image et une table colorimétrique enregistrés dans un espace mémoire du système informatique,
b. une étape de création, par les moyens de traitement, d'au moins une liste de points de mêmes coordonnées colorimétriques, les données relatives à au moins cette liste étant enregistrées en mémoire par les moyens d'enregistrement des données,
c. une étape de création, par les moyens de traitement, d'au moins un groupe de points d'une même liste de points de mêmes coordonnées colorimétriques et dont chaque point appartenant audit groupe doit être situé à une distance inférieure à une distance d/2 d'un point d'un autre groupe, la distance d enregistrée en mémoire correspondant à la distance minimale entre deux groupes de points,
d. une étape de filtrage et de suppression des groupes dont le nombre de points est inférieur à une valeur limite enregistrée dans une zone mémoire du système informatique,
e. étape de vectorisation, par les moyens de traitement, d'au moins un groupe de points, suivi de l'enregistrement en mémoire par les moyens d'enregistrement des coordonnées d'au moins un vecteur correspondant,
f. une étape d'association, via les moyens de traitement, de chaque vecteur à la tête d'impression correspondante, une base de données associant chaque tête d'impression à une coordonnée colorimétrique étant enregistrée en mémoire,
g. une étape de comparaison à l'aide des moyens de traitement des coordonnées des vecteurs avec les coordonnées des vecteurs optimaux respectifs enregistrés en mémoire et caractérisant un alignement optimal des têtes.

Ainsi, les coordonnées colorimétriques et spatiales permettent de discriminer les points.

Selon une autre particularité, le procédé est caractérisé en ce qu'un point est le plus petit élément de teinte homogène, ou pixel, de l'image du modèle enregistré.

Selon une autre particularité, le procédé est caractérisé en ce que seuls les points, dont les coordonnées colorimétriques sont associées via les moyens de traitement à une portion réduite de la table colorimétrique, sont intégrés dans au moins une des listes créées à l'étape b, ladite portion réduite étant enregistrée dans un espace mémoire du système informatique.

Selon une autre particularité, le procédé est caractérisé en ce qu'une étape supplémentaire de suppression des points d'une goutte dont le nombre de points est inférieur à une valeur pouvant être choisie par l'utilisateur et enregistrée en mémoire, est realisé via les moyens de traitement juste avant l'étape e du procédé.

Selon une autre particularité, le procédé est caractérisé en ce que la valeur de la distance d est choisie et enregistrée en mémoire par un utilisateur via des moyens de saisie associé au système informatique.

Selon une autre particularité, le procédé est caractérisé en ce que les groupes de points sont vectorisés par les moyens de traitement suivant la méthode des moindres carrés.

Selon une autre particularité, le procédé est caractérisé en ce que chaque groupe de points est ajusté par une fonction affine, de telle sorte que la somme des carrés des écarts des coordonnées, suivant la direction parallèle au sens d'impression (y), de chaque point du groupe par rapport à la fonction affine d'ajustement est minimale.

Un objectif supplémentaire de l'invention est de proposer une méthode d'alignement de têtes d'impression.

A cet effet, l'invention concerne une méthode d'alignement d'au moins une tête d'impression installée sur une machine d'impression, la position de chaque tête pouvant être ajustée à l'aide de moyens de réglage dans un plan parallèle au substrat, chaque tête comprenant une pluralité de buses, la machine d'impression comprenant notamment un moyen de déplacement du substrat, des moyens de mesure de la vitesse instantanée du substrat en déplacement, des moyens informatiques de gestion des opérations d'impression et d'alignement, les moyens informatiques comprenant au moins une zone mémoire, des moyens d'acquisition, d'enregistrement et de traitement des données, la méthode étant caractérisée en ce qu'elle comprend :
a. une étape de création par les moyens de traitement informatique et d'enregistrement par les moyens d'enregistrement dans une zone mémoire du système informatique, d'un modèle numérique utilisable pour l'alignement des têtes d'impression,
b. une étape d'impression dudit modèle avec la machine d'impression sur la base du modèle créé par les moyens de traitement et enregistré en mémoire, le modèle comprenant au moins un motif, chaque motif étant composé d'une pluralité de gouttes d'impression,
c. une étape de numérisation du modèle imprimé par les moyens d'acquisition commandés par les moyens de traitement du système informatique, suivi de l'enregistrement en mémoire par les moyens d'enregistrement de l'image du modèle acquis,
d. une étape de vectorisation des motifs de l'image selon la revendication 1, les vecteurs créés regroupant des points ayant notamment les mêmes coordonnées colorimétriques,
e. une étape de génération par les moyens de traitement et d'enregistrement par les moyens d'enregistrement dans une zone mémoire du système informatique, d'un fichier de configuration de l'alignement d'au moins une tête d'impression réalisé sur la base des résultats obtenus à l'étape précédente.

Selon une autre particularité, la méthode est caractérisée en ce que la machine d'impression comprend, indépendamment du moyen de déplacement, un moyen de détection des bords du substrat perpendiculaire au déplacement, de manière à ce que les moyens de traitement déclenche l'impression d'au moins une tête d'impression au moment opportun afin de réaliser l'impression d'un modèle, la vitesse instantanée de déplacement du substrat étant connue à chaque instant et la distance optimale entre le moyen de détection et chaque tête d'impression étant enregistrée dans une zone mémoire du système informatique.

Selon une autre particularité, la méthode est caractérisée en ce qu'une étape d'affichage de données de configuration de l'alignement d'au moins une tête d'impression est réalisé parallèlement à la génération du fichier de configuration, via des moyens d'affichage compris dans les moyens informatiques.

Selon une autre particularité, la méthode est caractérisée en ce que les moyens de réglage des têtes permettent de modifier la position des têtes selon deux directions linéaires respectivement perpendiculaire et parallèle au sens d'impression, et selon une direction angulaire dans un plan parallèle au substrat.

Selon une autre particularité, la méthode est caractérisée en ce que le modèle imprimé comprend d'une part au moins un motif sensiblement perpendiculaire au sens d'impression, chaque motif étant réalisé par l'ensemble ou une partie des buses de chaque tête d'impression, et d'autre part au moins un motif sensiblement parallèle au sens d'impression, chaque motif étant réalisé par la même buse d'une tête d'impression, les motifs perpendiculaires au sens d'impression permettant de vérifier l'alignement angulaire des têtes et l'alignement des têtes selon la direction parallèle au sens d'impression, les motifs parallèles au sens d'impression permettant de vérifier l'alignement des têtes selon la direction perpendiculaire au sens d'impression.

Selon une autre particularité, la méthode est caractérisée en ce que les moyens d'acquisition des données comprennent un capteur d'image 2D dont la résolution est comprise entre 0.1 et 100 mégapixels, préférentiellement autour de 6 mégapixels.

Selon une autre particularité, la méthode est caractérisée en ce que les moyens d'acquisition des données comprennent un capteur d'image linéaire fixé sur la machine et relié aux moyens de mesure de la vitesse instantanée du substrat, et dont le champ de vision est au moins aussi large que le modèle imprimé sur le substrat, ledit capteur étant contrôlé par les moyens informatiques de manière à numériser l'ensemble des motifs imprimés sur le substrat, la position du substrat étant connu à chaque instant grâce aux moyens de mesure de la vitesse instantanée dudit substrat

Selon une autre particularité, la méthode est caractérisée en ce qu'une étape d'étalonnage par les moyens d'acquisition et de traitement précède l'étape de numérisation du modèle.

L'invention, avec ses caractéristiques et avantages, ressortira plus clairement à la lecture de la description faite en référence aux dessins annexés dans lesquels :
La figure 1 illustre un digramme fonctionnel de l'algorithme permettant de réaliser l'ajustement linéaire,
La figure 2 illustre un exemple de modèle comprenant plusieurs motifs,
La figure 3 illustre une représentation de portions du motif pixellisées et vectorisées,
La figure 4 illustre un schéma tridimensionnel simplifié de la machine d'impression,
La figure 5 illustre le diagramme fonctionnel de la méthode d'alignement des têtes d'impression,
Les figures 6a à 6c illustrent les défauts de position possible des têtes d'impression.
La figure 7 illustre un schéma de positionnement en quinconce des têtes d'impression.

### DESCRIPTION DES MODES DE REALISATION PREFERES DE L'INVENTION

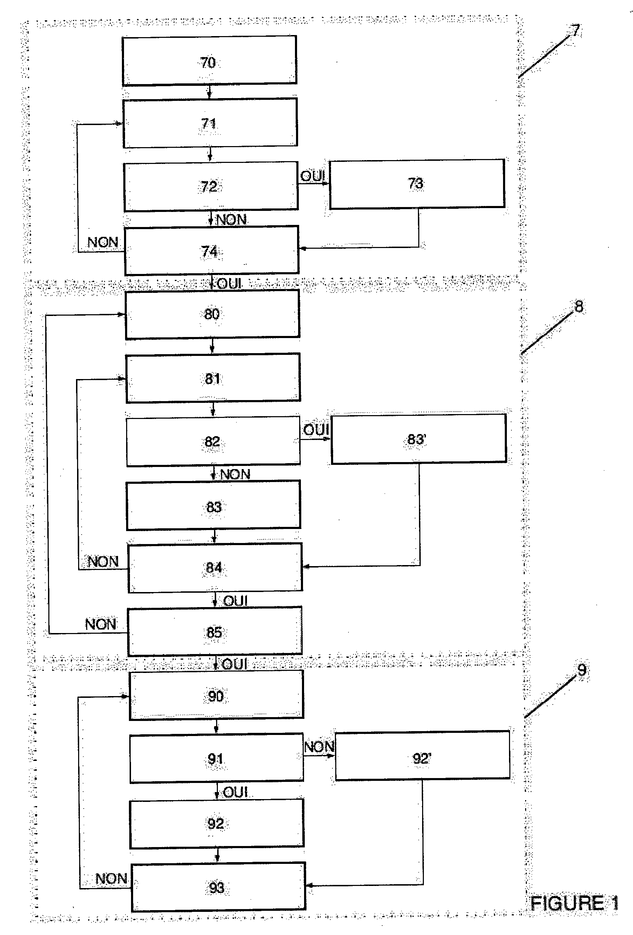

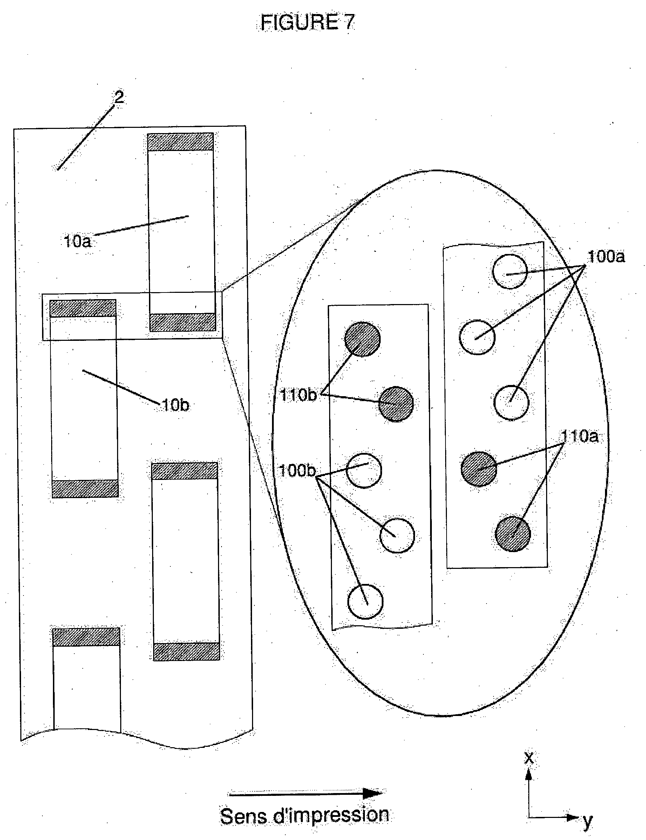

En référence à la figure 1, le procédé de vérification de l'alignement d'au moins une tête d'impression installée sur une machine d'impression, par ajustement linéaire d'au moins un groupe de point (5) va maintenant être décrit: Le procédé est mis en oeuvre par le biais d'un système informatique (0), comprenant par exemple et de façon non limitative des moyens de traitement des données, par exemple et de façon non limitative un processeur central (CPU de l'anglais central processing unit), des moyens d'acquisition des données contrôlés par les moyens de traitement des données, des moyens d'enregistrement des données associés à au moins un espace mémoire, par exemple et de façon non limitative un dispositif de stockage de masse, une mémoire flash de type USB associée à une interface de lecture/écriture, un lecteur/enregistreur optique. Dans certains modes de réalisation, les têtes d'impressions (1 a, 10a, 1 b, 10b, 1 c, 1 d) comprennent au moins une rangée comprenant une pluralité de buses alignées suivant une direction perpendiculaire au sens d'impression, lesdites têtes (1a, 10a, 1 b, 10b, 1 c, 1d) étant disposées les unes à la suite des autres dans la machine d'impression. Dans certains modes de réalisation, illustrés figure 7, les têtes d'impression sont disposés en quinconce. Par exemple et de façon non limitative, les têtes d'impression (1 a, 10a, 1 b, 10b, 1 c, 1 d) sont des têtes jet d'encre, et les buses comprennent des éléments générant des ondes de pression, contrôlés par le système informatique et permettant d'expulser des gouttes de liquide (5) sur le substrat (2), par exemple et de façon non limitative de l'encre ou un vernis. Par exemple et de façon non limitative, ces éléments sont des éléments piézo-électriques. Dans certains modes de réalisation, l'objectif de l'invention est de réaliser, par le biais d'au moins un algorithme compris dans un ensemble logiciel installé dans le système informatique, une mise en équation affine d'au moins un motif (40, 41) représenté sur une image d'un modèle enregistré et sauvegardé dans au moins un espace mémoire du système informatique (0). Cette mise en équation est réalisée suivant un procédé dont les étapes successives vont maintenant être décrites.

Ce procédé comprend trois phases principales (7, 8, 9), elles mêmes comprenant plusieurs étapes.

Dans des modes de réalisation préférentiels, l'image issue de la numérisation d'un modèle imprimé comprenant une pluralité de gouttes (4) imprimées, chaque goutte (4) comprenant une pluralité de points (5). Dans un mode de réalisation préférentiel, un point (5) est le plus petit élément de teinte homogène présent sur l'image du modèle enregistré, et dont la teinte est conforme à une base de données colorimétrique sauvegardée dans une zone mémoire du système informatique (0). Ainsi, dans la suite de la description, nous emploierons le terme « pixel pour décrire les points (5) formant les motifs du modèle.

La première phase du procédé est une phase de filtrage (7) des couleurs des pixels (5). Dans une première étape, les moyens de traitement du système informatique créent des listes de couleurs (70), chaque liste étant enregistrée grâce aux moyens d'enregistrement dans une zone mémoire du système informatique (0). Chaque liste est représentative de la couleur d'une tête d'impression (1a, 10a, 1 b, 10b, 1 c, 1 d). Il y a donc au moins autant de liste créées que de têtes d'impression (1 a, 10a, 1 b, 10b, 1 c, 1 d) installées sur la machine d'impression. Dans une deuxième étape, les moyens de traitement analysent chaque pixel (5) séparément, afin dans un premier temps de leur attribuer des coordonnées colorimétriques (71) et d'éliminer les pixels (5) dont la couleur ne correspond à aucune connue ou recherchée (72), une liste des coordonnées colorimétriques d'intérêt étant enregistrée dans une base de données contenue dans un espace mémoire du système informatique (0). Par exemple et de façon non limitative, les coordonnées colorimétriques utilisées sont conformes au code RGB.

Dans un deuxième temps, lorsque la couleur d'un pixel (5) est comprise dans la liste de coordonnées colorimétriques enregistrée dans la base de données, les moyens de traitement du système informatique (0) vont associer le pixel (5) correspondant dans une des listes crées, et lui attribuer des coordonnées spatiales (73), par exemple et de façon non limitative dans un repère orthonormé dont les axes x et y sont perpendiculaires et dans le plan de l'image du modèle, le troisième axe z étant perpendiculaire aux deux autres.

Les listes de pixels (5) ainsi créées par les moyens de traitement et enregistrées dans une zone mémoire du système informatique (0), comprennent les coordonnées spatiales d'un ensemble de pixels (5) ayant les mêmes coordonnées colorimétriques. Ainsi il y a autant de listes que de coordonnées colorimétriques. Toutes ces listes une fois finalisées sont enregistrées dans une zone mémoire du système informatique (0) grâce aux moyens d'enregistrement des données.

Une fois que l'ensemble des pixels (5) du modèle sont analysés par les moyens de traitement (74), lesdits moyens de traitement initient la deuxième phase (8) du procédé, consistant en l'analyse de chaque liste de pixels (5) de manière à créer des groupes de pixels (5). Chaque liste est discriminée en au moins un groupe.

Dans une première étape, les moyens de traitement choisissent une première liste (80) de pixels (5). Chaque pixel (5) de la liste est analysé (81) par les moyens de traitement : les moyens de traitement considère que deux groupes distincts de pixels (5) doivent être séparés d'une distance minimale d, enregistrée dans une zone mémoire du système informatique (0). Dans certains modes de réalisation, la distance seuil (d) est entrée via une interface de saisie par un utilisateur dans une zone mémoire du système informatique (0).

Si un pixel (5) est situé à une distance inférieure à d/2 d'un groupe, alors ledit pixel (5) appartient audit groupe (82), et ces coordonnées spatiales sont associées audit groupe (83'). Si le pixel (5) d'une liste n'est proche d'aucun groupe répertorié, alors un nouveau groupe de pixel est créé (83). A titre d'exemple et de manière non limitative, deux groupes de pixels (5) représentent deux motifs (40, 41) séparés sur l'image du modèle. Rappelons que les groupes de pixels (5) appartenant à une même liste de pixels (5) ont tous les mêmes coordonnées colorimétriques: En conclusion, un groupe de pixels (5) est un ensemble de pixels (5) appartenant au même motif (40, 41) parmi une pluralité représentée sur un modèle, et dont les coordonnées colorimétriques sont identiques. Dans un mode de réalisation préférentiel, les motifs (40, 41) sont sensiblement linéaires. Les moyens de traitement analysent tous les pixels (5) d'une liste (84), et ce pour toutes les listes enregistrées (85) dans une zone mémoire du système informatique (0), avant de passer à la troisième étape (9) du procédé, consistant en l'analyse par les moyens de traitement de chaque groupe de pixels (5), de telle sorte qu'un algorithme d'ajustement linéaire leur soit appliqué. Les moyens de traitement sélectionnent un groupe (90) de pixels (5), et évaluent le nombre de pixels (5) présents dans chaque groupe (91). Si le nombre de pixels (5) est inférieur à une valeur enregistrée dans une zone mémoire du système informatique (0), cette valeur pouvant être choisie par un utilisateur et entrer via des moyens de saisie connectés au système informatique, alors les moyens de traitement suppriment (92') ledit groupe de pixels (5).

Ainsi, chaque groupe dont le nombre de pixels (5) est supérieur à une valeur enregistrée dans le système informatique (0), est vectorisé (92), c'est-à-dire que l'ensemble des pixels (5) d'un même groupe est ajusté, grâce à un algorithme d'ajustement, par le vecteur (50) le plus proche du motif (40, 41) représenté sur le modèle. Le procédé est terminé lorsque tous les groupes contenant suffisamment de pixels (5) sont vectorisés (93).

Dans un mode de réalisation préférentiel, l'algorithme permettant de réaliser l'ajustement est basé sur la méthode des moindres carrés. Chaque groupe de pixels (5) est donc ajusté par une fonction affine dont l'équation est de type Y = aX+b. L'analyse numérique basée sur la méthode des moindres carrés, bien connue de l'homme du métier, consiste à trouver les coefficients a et b de la fonction affine permettant de minimiser la quantité correspondant à la somme des carrés des écarts des coordonnées des pixels (5) sur le substrat (2) suivant une direction sensiblement parallèle au sens d'impression (y) par rapport à la droite d'équation Y = aX+b.

Les coordonnées des vecteurs (50) ajustant chaque groupe de pixels (5) sont finalement enregistrées dans une zone mémoire du système informatique, à l'aide des moyens d'enregistrement des données.

Les moyens de traitements associent chaque vecteur calculé à la tête d'impression (1 a, 10a, 1 b, 10b, 1c, 1 d) correspondante, une base de données associant chaque tête d'impression (1 a, 10a, 1 b, 10b, 1 c, 1 d) à une coordonnée colorimétrique étant enregistrée dans une zone mémoire du système informatique (0). Enfin, les moyens de traitement comparent les coordonnées des vecteurs calculés avec les coordonnées de vecteurs optimaux enregistrés dans une zone mémoire du système informatique (0), caractérisant un alignement optimal des têtes d'impression (1 a, 10a, 1b, 10b, 1c, 1 d). L'alignement des têtes d'impression en s'appuyant sur ce type de vecteur, résultat de l'ajustement d'un groupe de pixels (5) compris dans des gouttes (4) d'impression, permet de s'affranchir des imprécisions liées à l'éjection des gouttes depuis les têtes d'impression vers le substrat (2). Par exemple et de manière non limitative, chaque élément piézoélectrique commandant l'éjection des gouttes (4) présente une imprécision suivant une direction perpendiculaire au sens d'impression (dx) et une imprécision suivant une direction parallèle au sens d'impression (dy). La vectorisation des groupes de pixels (5) permet de s'affranchir de ces imprécisions.

Dans certains modes de réalisation, une étape optionnelle peut s'insérer dans le procédé. Elle consiste en la suppression par les moyens de traitement des éventuels artefacts présents sur le modèle, qui ne doivent pas être confondus avec les motifs (40, 41) devant être ajustés et vectorisés. Par exemple et de manière non limitative, ces artefacts peuvent être des poussières ou des erreurs numériques sur l'image. Par exemple et de manière non limitative, un procédé de traitement et de filtrage de l'image élimine tous les détails de l'image dont la taille n'est pas comprise entre deux valeurs seuil enregistrées dans une zone mémoire du système informatique.

Dans certains modes de réalisation et en référence à la figure 7, les têtes d'impression (10a, 10b) peuvent être installées en quinconce dans la machine d'impression. Selon ce mode de réalisation particulier, certaines buses appartenant à des têtes d'impression différentes peuvent avoir les mêmes coordonnées selon la direction perpendiculaire au sens d'impression (axe x). Dans ce cas, il y a un risque de recouvrement au cours de l'impression. Pour éviter cet inconvénient, les moyens informatiques désactivent certaines buses (110a, 110b) des têtes d'impression (10a, 10b), de manière à ce qu'il n'y ait aucune zone de recouvrement lors de l'impression, tout en conservant la précision d'impression relative à la distance entre deux buses d'une même tête d'impression (10a, 10b). Ainsi, pour chaque coordonnée suivant l'axe x pour laquelle les moyens informatiques (0) répertorient au moins une buse d'impression, une seule et unique buse (100a, 100b) sera activée tandis que toutes les autres buses (110a, 110b) présentant les même coordonnées suivant l'axe x seront désactivées.

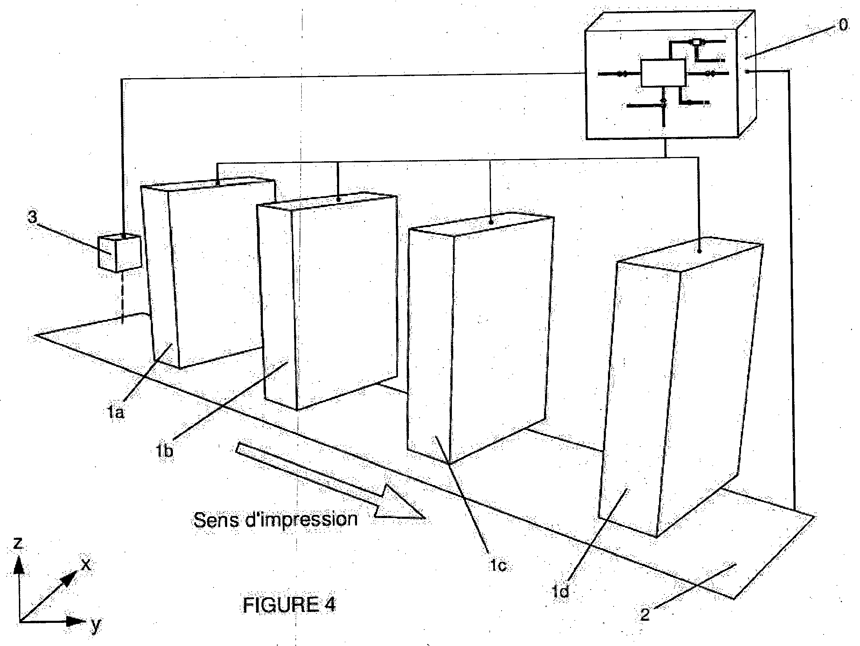

Un autre objet de l'invention est de proposer, dans certains modes de réalisation, une méthode d'alignement d'au moins une tête d'impression (1 a, 10a, 1 b, 10b, 1 c, 1 d) installée sur une machine d'impression comportant au moins une tête d'impression (1 a, 10a, 1 b, 10b, 1 c, 1 d). En référence à la figure 4, la machine d'impression comporte un système informatique (0) gérant notamment les opérations d'impression et d'alignement des têtes (1 a, 10a, 1 b, 10b, 1 c, 1 d), et comprenant notamment des moyens de traitement des données, par exemple et de façon non limitative un processeur central (CPU de l'anglais central processing unit), des moyens d'enregistrement des données associés à au moins un espace mémoire, par exemple est de façon non limitative un dispositif de stockage de masse, une mémoire flash de type USB associée à une interface de lecture/écriture, un lecteur/enregistreur optique, et un moyen de déplacement du substrat d'impression, la vitesse dudit moyen de déplacement pouvant être mesurée instantanément par un codeur (20). Dans certains modes de réalisation, le codeur (20) est un codeur optique rotatif comprenant une source de lumière, un disque strié, dont les stries sont sensiblement équidistantes, et un photodétecteur. Ainsi, lorsque le disque est en rotation à l'intérieur du codeur, le photodétecteur est en mesure de recevoir la lumière de la source lorsqu'une strie se trouve sur le chemin situé entre le photodétecteur et la source lumineuse. Le nombre de stries étant parfaitement connue, le codeur (20) permet donc, sachant que le mouvement du disque strié est directement dépendant du mouvement du moyen de déplacement de la machine d'impression, de connaitre à tout moment la vitesse instantanée du moyen de déplacement et à fortiori du substrat (2). La résolution du codeur (20) dépend du nombre de stries présentes sur le disque. Par exemple et de façon non limitative, le codeur optique rotatif a une résolution de 6500 coups par pouce (cpi), soit une précision de l'ordre de 4 micromètres.

Chaque tête d'impression (1 a, 10a, 1 b, 10b, 1c, 1 d) comprend des moyens de réglage de la position, qui permettent d'ajuster la position selon deux directions linéaires - une perpendiculaire au sens d'impression (x), et une parallèle au sens d'impression (y) - et dans une direction angulaire, dans un plan parallèle au substrat. Ces moyens de réglages sont par exemple et de façon non limitative des vis à pas micrométriques montées sur ressorts et chacune pouvant être reliées à un moteur contrôlé par le système informatique. Dans certains modes de réalisation non limitatifs, des moteurs piézo-électriques contrôlés par les moyens informatiques font office de moyens de réglage.

Enfin, la machine d'impression comprend dans des modes de réalisation préférentiels une cellule de détection (3) de la présence d'un substrat, contrôlée par le système informatique, dont la fonction est de détecter les bords du substrat perpendiculaires au sens d'impression. Lorsque la cellule de détection (3) détecte un bord du substrat perpendiculaire au sens d'impression, l'information de détection est envoyée au système informatique. La distance entre la cellule et chaque tête d'impression étant connue et enregistrée dans une zone mémoire du système informatique, la vitesse instantanée du substrat étant également connue à chaque instant grâce au codeur (20) optique rotatif, les moyens de traitement du système informatique sont alors en mesure d'activer les éléments générant des ondes de pression des buses de chaque tête d'impression à l'instant précis où doivent être expulsées des goutes de liquide (4) pour réaliser un motif d'impression (40, 41). Ainsi, l'homme du métier comprend la nécessité d'un positionnement des têtes (1 a, 10a, 1b, 10b, 1 c, 1 d) le plus parfait possible afin d'éviter au maximum les artefacts lors de l'impression.

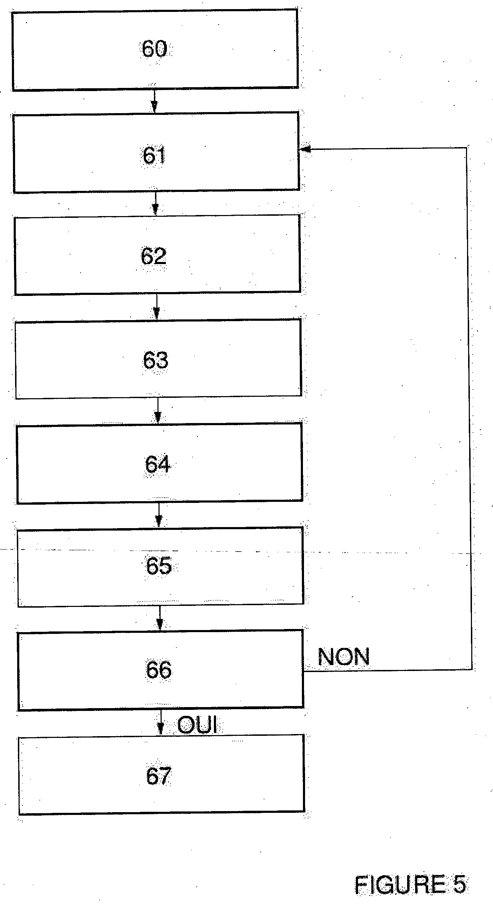

En référence à la figure 5, la méthode permettant dans certains modes de réalisation d'aligner au moins une tête d'impression (1a, 10a, 1 b, 10b, 1 c, 1d) installée sur une machine d'impression va maintenant être décrite.

Au cours de la première étape de la méthode (61), un modèle d'alignement numérique comprenant plusieurs motifs (40, 41) est réalisé par les moyens de traitement, chaque motif (40, 41) comprenant un ensemble de pixels (5) dont les coordonnées colorimétriques sont identiques. Le modèle est adapté en fonction du nombre de têtes (1 a, 10a, 1 b, 10b, 1 c, 1 d) dont la position doit être vérifiée et/ou corrigée par les moyens de traitement, et en fonction du type de correction à apporter à chaque tête d'impression (1 a, 10a, 1 b, 10b, 1 c, 1 d). Par exemple et de façon non limitative, le modèle est composé de motifs (40, 41) sensiblement linéaires.

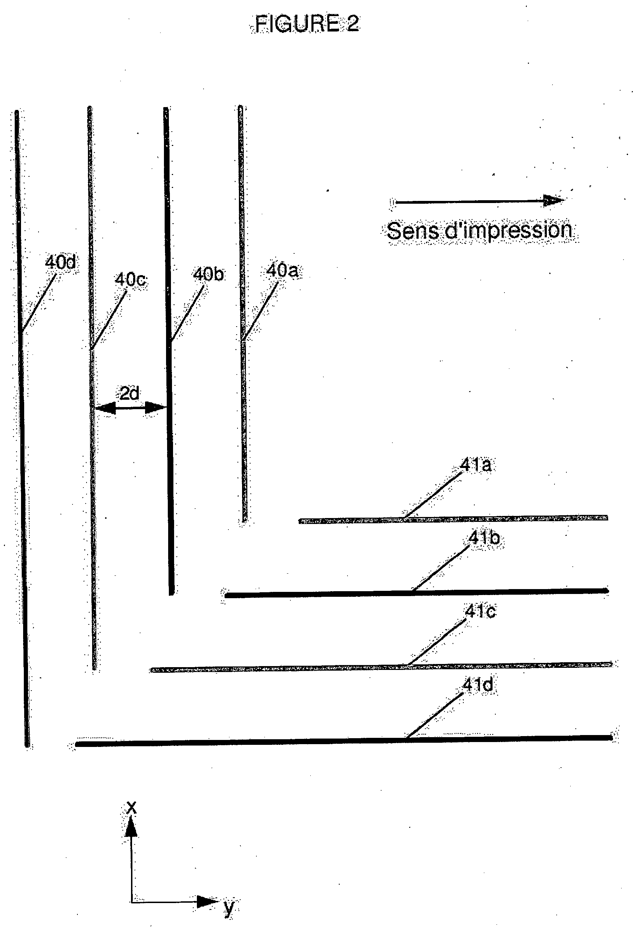

Au cours de la deuxième étape (62), l'impression du modèle créé par les moyens de traitement à l'étape précédente, et enregistré dans une zone mémoire du système informatique, est réalisé sur un substrat (2) à l'aide de la machine d'impression commandée par le système informatique. Dans certains modes de réalisation et en référence à la figure 2, le modèle est constitué d'au moins un motif (41 a, 41 b, 41 c, 41 d) sensiblement linéaire et parallèle au sens d'impression, et d'au moins un motif (40a, 40b, 40c, 40d) sensiblement linéaire et perpendiculaire au sens d'impression. Chaque motif (41 a, 41b,- 41 c, 41 d) parallèle au sens d'impression - dans la direction y - est réalisé par une même buse d'une tête d'impression, tandis que chaque motif (40a, 40b, 40c, 40d) perpendiculaire au sens d'impression - dans la direction x - est réalisé par l'ensemble ou une partie des buses d'une même tête d'impression (1 a, 10a, 1 b, 10b, 1c, 1 d), lesdites buses expulsant des gouttes de liquides (4). Chaque motif (40, 41) est composé d'une pluralité de gouttes (4). Les motifs perpendiculaires (40a, 40b, 40c, 40d) au sens d'impression permettent de vérifier l'alignement angulaire des têtes (1a, 10a, 1b, 10b, 1 c, 1 d) et l'alignement des têtes selon la direction parallèle au sens d'impression, les motifs parallèles (41 a, 41 b, 41 c, 41 d) au sens d'impression permettent de vérifier l'alignement des têtes (1 a, 10a, 1 b, 10b, 1 c, 1 d) selon la direction perpendiculaire au sens d'impression.

Au cours de la troisième étape, le modèle imprimé à l'étape précédente est numérisé (63) par les moyens d'acquisition, lesdits moyens d'acquisition étant contrôlés par les moyens de traitement du système informatique. Dans certains modes de réalisation, les moyens d'acquisition comprennent un capteur d'images 2D installé en dehors de la machine d'impression, et positionné au dessus du substrat imprimé, et reliée au système informatique. Par exemple et de façon non limitative, la résolution du capteur peut être comprise entre 0.1 et 100 mégapixels, préférentiellement autour de 6 mégapixels. De manière préférentielle et non limitative, une caméra numérique est utilisée pour numériser le modèle. Une fois numérisé, le modèle est enregistré par les moyens d'enregistrement dans une zone mémoire du système informatique.

Dans certains modes de réalisation, les moyens d'acquisition comprennent un capteur linéaire, fixé sur la machine d'impression et directement reliée d'une part aux moyens informatiques (0) et d'autre part aux moyens de mesure de la vitesse instantanée (20) du substrat (2). Alors qu'une caméra 2D, comme celle décrite dans le paragraphe précédent, numérise les motifs (40, 41) du substrat (2) en une seule fois de manière quasi instantanée, un capteur linéaire est relié aux moyens de mesure de la vitesse instantanée (20) du substrat (2) afin de numériser les motifs (40, 41) du substrat (2) à mesure que ce dernier avance dans le champ de vision du capteur linéaire. Par exemple et de façon non limitative, la vitesse instantanée du substrat (2) étant connue à chaque instant avec une grande précision, les moyens informatiques (0) activent le capteur linéaire à l'instant précis où le premier bord du substrat (2), selon le sens d'impression et perpendiculaire au sens d'impression, entre dans le champ de vision du capteur linéaire. De la même manière, lorsque le bord opposé du substrat (2) sort du champ de vision du capteur linéaire, alors les moyens informatiques (0) désactivent le capteur linéaire. Selon un autre exemple non limitatif, les moyens informatiques (0) activent le capteur linéaire lorsque ce dernier balaye une zone réduite de la surface du substrat (2), les coordonnées de cette zone étant préalablement enregistrées dans une zone mémoire du système informatique. Entre ces deux actions, les motifs (40, 41) présents sur le substrat (2) sont numérisés. Dans certains modes de réalisation, le champ de vision du capteur linéaire est au moins aussi large que le motif imprimé sur e substrat (2).

La numérisation du substrat (2) avec un capteur linéaire est une opération qui est réalisée en ligne, au cours du processus d'impression de motifs (40, 41) sur le substrat (2). L'utilisation d'une caméra 2D autorise une numérisation des différents modèles réalisés à un moment ultérieur : la numérisation peut donc dans ce cas être réalisée hors ligne, le positionnement du substrat (2) étant dans ce cas réalisé par l'utilisateur.

De manière optionnelle, une étape d'étalonnage (60) par les moyens d'acquisition et de traitement précède la troisième étape de la méthode. A cette fin, un modèle d'étalonnage est réalisé par la machine d'impression, commandée par le système informatique. Ce modèle d'étalonnage comprend deux motifs (41 a, 41 b, 41 c, 41 d) sensiblement parallèles au sens d'impression, chaque motif étant composé d'une pluralité de gouttes (4) réalisées par la même buse, les deux motifs (41 a, 41 b, 41 c, 41 d) étant réalisés par deux buses éloignées et séparées d'une distance dont la valeur est connue, cette valeur étant mémorisé dans le système informatique, les deux buses appartenant à une même tête d'impression (1 a, 10a, 1 b, 10b, 1 c, 1 d). Les moyens d'acquisition numérisent le modèle d'étalonnage qui est enregistré dans une zone mémoire du système. Le procédé d'ajustement décrit plus haut dans la description est alors appliqué aux deux motifs (41 a, 41 b, 41 c, 41 d) du modèle, créant ainsi deux vecteurs (50) parallèles au sens d'impression. La distance mesurée entre ces deux vecteurs est alors associée par les moyens de traitement à la distance réelle séparant les deux buses.

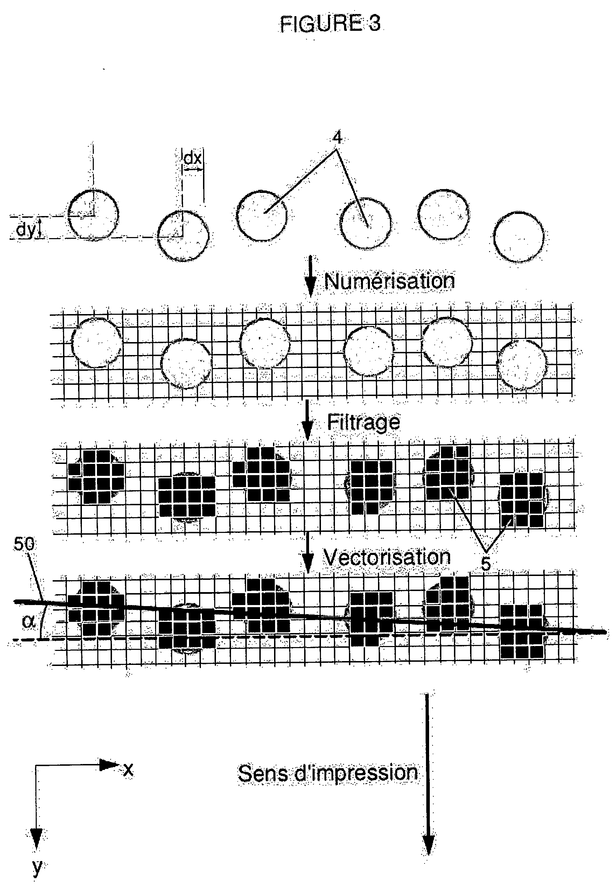

Au cours de la quatrième étape (64) et en référence à la figure 3, les moyens de traitement du système appliquent le procédé d'ajustement linéaire décrit plus haut. Chaque goutte (4) du modèle est pixellisée par les moyens de traitement, des coordonnées colorimétriques et spatiales étant alors attribuées à chaque pixel (5) du modèle. Dans certains modes de réalisation, non limitatifs, les pixels (5) dont les coordonnées colorimétriques ne correspondent à aucune couleur pouvant être proposée par l'ensemble des têtes d'impression (1a, 10a, 1 b, 10b, 1 c, 1 d) de la machine d'impression, sont éliminés et effacés de la mémoire du système. Des listes de pixels (5) de même coordonnées colorimétriques sont ensuite créées par les moyens de traitement et enregistrées par les moyens d'enregistrement dans une zone mémoire du système informatique. Des groupes de pixels (5) sont ensuite créés, chaque groupe comprenant des pixels (5) de même coordonnées colorimétriques, chaque pixel (5) situé à une distance inférieure à d/2 d'un groupe appartient audit groupe, la valeur de la distance d enregistrée en mémoire étant supérieure à la taille d'une goutte (4) et inférieure à la distance minimale entre deux groupes de pixels (5). Une étape supprimant les groupes dont le nombre de pixels (5) est inférieur à une valeur seuil enregistrée dans une zone mémoire du système informatique (0), est réalisée par les moyens de traitement. Cette valeur seuil peut être saisie par un utilisateur via des moyens de saisie, par exemple et de façon non limitative une interface homme/machine type clavier. De manière optionnelle, une étape de suppression des artefacts, par exemple et de façon non limitative des poussières ou des gouttes satellites, est réalisée par les moyens de traitement. Enfin, chaque groupe de pixel (5) identifié par les moyens de traitement est ajusté selon un algorithme d'ajustement linéaire, par exemple et de façon non limitative un algorithme appliquant la méthode des moindre carrés. Chaque groupe est ainsi vectorisé, les coordonnées desdits vecteurs (50) étant enregistrées dans une zone mémoire du système informatique.

Chaque vecteur (50) est ensuite associé, via les moyens de traitement, à une tête d'impression (1a, 10a, 1b, 10b, 1c, 1 d), par comparaison des coordonnées colorimétriques de chaque vecteur (50) avec les coordonnées colorimétriques correspondant à la couleur de chaque tête d'impression (1 a, 10a, 1 b, 10b, 1 c, 1 d) et enregistrées en mémoire dans une base de données du système informatique (0). Dans des modes de réalisation préférentiels et de manière non limitative, à chaque tête d'impression (1 a, 10a, 1 b, 10b, 1 c, 1d) est associé un vecteur (50) sensiblement parallèle au sens d'impression - suivant la direction y - et un vecteur (50) sensiblement perpendiculaire - selon la direction x - au sens d'impression.

Finalement, les coordonnées des vecteurs (50) obtenus suite à l'application de l'algorithme d'ajustement linéaire sont comparées à des coordonnées de ces mêmes vecteurs obtenus dans des conditions de positionnement des têtes (1 a, 10a, 1b, 10b, 1c, 1 d) idéales, ces coordonnées idéales étant enregistrées en mémoire dans une base de données du système informatique, correspondant à une position optimale de chaque tête d'impression (1 a, 10a, 1 b, 10b, 1 c, 1 d) de la machine d'impression. Ainsi, les distances optimales entre chaque tête d'impression (1 a, 10a, 1 b, 10b, 1 c, 1 d) sont connues et mémorisées dans une base de données du système informatique. De même, les distances d'écartement entre les buses d'une même tête d'impression (1 a, 10a, 1 b, 10b, 1 c, 1 d), et ce pour chaque tête d'impression (1 a, 10a, 1 b, 10b, 1 c, 1 d), sont connues et mémorisées dans cette même bases de données. Enfin, des têtes d'impression (1 a, 10a, 1b, 10b, 1 c, 1 d) positionnées de manière optimale réalisent des motifs (40, 41) qui sont ajustés par des vecteurs (50) parallèles.

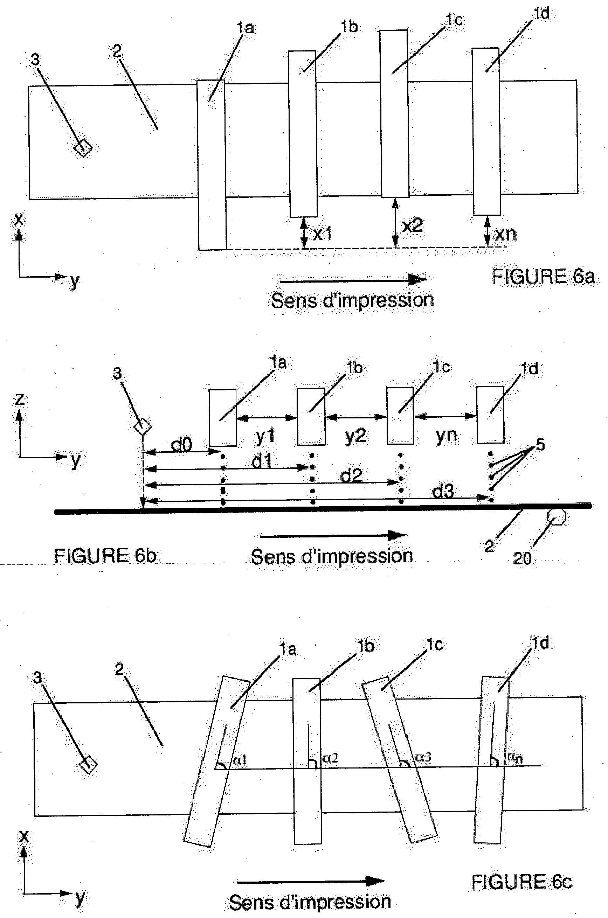

Comme décrit plus haut, la position des têtes d'impression (1 a, 10a, 1 b, 10b, 1 c, 1 d) peut être ajustée grâce aux moyens de réglage suivant deux directions linéaires - une parallèle au sens d'impression (y) et l'autre perpendiculaire (x) au sens d'impression - et une direction angulaire dans un plan parallèle au substrat. En référence aux figures 6a à 6c, les défauts de positionnement calculés (65) suivant ces trois directions vont être décrits ci-après.
- Défaut de positionnement angulaire, dans un plan parallèle: au substrat. Afin de mesurer la possible déviation angulaire des têtes d'impression (1 a, 10a, 1 b, 10b, 1 c, 1 d), les coordonnées des vecteurs (50) sensiblement perpendiculaires au sens d'impression sont analysées par les moyens de traitement. Pour rappel, les coordonnées des vecteurs (50) sont obtenus par ajustement linéaire des pixels (5) appartenant à un même groupe suivant un algorithme, enregistré dans une zone mémoire du système informatique (0) et contrôlé par ledit système, l'équation de la droite ajustant lesdits pixels étant du type Y=aX+b. Si une tête d'impression (1 a, 10a, 1 b, 10b, 1c, 1d) est correctement alignée, alors l'équation ajustant les points d'un même vecteur (50) est du type Y = b, la valeur de a étant nulle dans ce cas. Si l'équation ajustant les points d'un même vecteur (50) est du type Y=aX+b (a étant différent de 0), alors une correction de l'alignement angulaire de la tête (1a, 10, 1 b, 10b, 1 c, 1 d) correspondante par rapport au sens d'impression devra être réalisée.
- Défaut de positionnement selon la direction y, parallèle, au sens d'impression. Comme décrit plus haut, la comparaison des données du codeur (20) avec celles envoyées par la cellule (3) détectant le substrat, permet aux buses d'expulser des gouttes de liquide (4) de telle manière qu'un motif (40, 41) quelconque soit fidèlement imprimé, même dans le cadre de l'utilisation de plusieurs têtes d'impression (1 a, 10, 1 b, 10b, 1 c, 1d) simultanément. En effet, la vitesse instantanée v du substrat (2) ainsi que sa position précise à un instant t₀ enregistré en mémoire sont connue à chaque instant. La distance théorique dᵢ de chaque tête d'impression (1 a, 10a, 1 b, 10b, 1 c, 1 d) à la cellule de détection (3) du substrat (2) est également connue et mémorisée dans une base de données du système informatique. Ainsi, sur la base de ces informations de distance et de vitesse, les moyens de traitement déduisent précisément le temps de déclenchement de la tête d'impression (1 a, 10a, 1 b, 10b, 1 c, 1 d) numéro i, et envoie une information activant les éléments piézo-électriques d'au moins une buse de la tête d'impression (1a, 10a, 1b, 10b, 1c, 1 d). Au cours de l'impression du modèle d'alignement, la distance théorique entre deux vecteurs (50) sensiblement perpendiculaires au sens d'impression, l'un représentatif de la tête d'impression de référence (1a) et l'autre représentatif d'une autre tête d'impression (10a, 1b, 10b, 1c, 1 d), est donc théoriquement connue, et est le résultat de la soustraction des distances de chaque tête d'impression (1 a, 10a, 1 b, 10b, 1 c, 1 d) ayant tracé chaque vecteurs (50) à la cellule de détection (3) du substrat (2). Les moyens de traitement réalise une mesure réelle de cette distance et la compare alors à la valeur théorique. Si une différence est trouvé par les moyens de traitement, alors une correction de la position d'une tête (1 b, 1 c, 1 d) suivant la direction y par rapport à la tête de référence (1a) devra être réalisée, la correction étant équivalente à la différence entre la valeur théorique et la valeur mesurée de la distance du vecteur (50) tracé par la tête de référence (1 a) au vecteur (50) tracé par la tête (1 b, 1 c, 1 d) devant être alignée suivant la direction y, la tête de référence (1 a) étant par exemple et de façon non limitative la première tête d'impression dans le sens de l'impression.
- Défaut de positionnement suivant la direction x, perpendiculaire au sens d'impression. Au cours de l'impression du modèle d'alignement, la distance théorique entre deux vecteurs (50) sensiblement parallèles au sens d'impression est théoriquement connue, et correspond à l'espacement entre au moins deux buses. Cette valeur est mémorisée dans une zone mémoire du système informatique. Les moyens de traitement réalisent une mesure réelle de cette distance et la compare alors à la valeur théorique. Si une différence est trouvé par les moyens de traitement, alors une correction de la position d'une tête (1 b, 1 c, 1 d) suivant la direction x par rapport à la tête de référence (1a) devra être réalisée, la correction étant équivalente à la différence entre la valeur théorique et la valeur mesurée de la distance du vecteur (50) tracé par une buse de la tête de référence (1a) au vecteur tracé par une buse de la tête (1b, 1 c, 1 d) devant être aligné suivant la direction x, la tête de référence (1 a) étant par exemple et de façon non limitative la première tête d'impression dans le sens de l'impression.

Dans une dernière étape, une fois toutes les têtes d'impression analysées (66), un fichier de configuration (67) de l'alignement des têtes d'impression (1 a, 10a, 1 b, 10b, 1 c, 1 d) de la machine est réalisé par les moyens de traitement, ledit fichier étant mémorisé dans une zone mémoire du système informatique. Ce fichier comprend les corrections à apporter à chaque tête d'impression (1 a, 10a, 1 b, 10b, 1 c, 1 d) dont la position doit être vérifiée et/ou corrigée. Dans certains modes de réalisation, ce fichier comprend les valeurs des corrections et le type de correction - suivant la direction x, y et/ou angulaire, ou bien quelle(s) buses(s) désactiver - à apporter aux moyens de réglages situés sur les têtes d'impression (1 a, 10a, 1b, 10b, 1 c, 1 d). Dans certains modes de réalisation, une étape d'affichage des données de configuration de l'alignement d'au moins une tête d'impression (1 a, 10a, 1 b, 10b, 1 c, 1 d) est réalisée en parallèle de la génération du fichier de configuration, via des moyens d'affichage compris dans les moyens informatiques.

Ce fichier de configuration peut être directement consulté par un utilisateur qui réalisera par la suite les réglages consistant à aligner les têtes d'impression (1 a, 10a, 1 b, 10b, 1 c, 1 d). Dans certains modes de réalisation, ce fichier peut être transmis via des moyens de transmission filaire ou non, à un système informatique (0) relié aux moyens de réglage des têtes d'impression (1 a, 10a, 1 b, 10b, 1 c, 1 d). Les moyens de traitement analysent les corrections devant être apportées à chaque tête d'impression (1 a, 10a, 1 b, 10b, 1 c, 1 d), et commande les moyens de réglage afin que les corrections de positions soient réalisées automatiquement suivant les informations d'alignement comprises dans le fichier de configuration.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus

## Revendications

1. Procédé de vérification de l'alignement d'au moins une tête d'impression (1 a, 10a, 1 b, 10b, 1 c, 1 d) installée sur une machine d'impression, par ajustement linéaire d'au moins un groupe de points (5) représentés sur une image issue de la numérisation d'un modèle comprenant une pluralité de gouttes (4) imprimées, **caractérisé en ce que** chaque goutte (4) comporte une pluralité de points (5), chaque point (5) ayant une teinte uniforme conforme à une base de données colorimétrique sauvegardée dans une zone mémoire d'un système informatique (0) mettant en oeuvre le procédé et comprenant au moins un espace mémoire, des moyens d'acquisition, d'enregistrement et de traitement des données, le procédé comprenait
a. une étape de détection de la couleur des points (5) par les moyens de traitement, suivi de l'attribution par les moyens de traitement de coordonnées spatiales et de coordonnées colorimétriques à chaque point (5) d'une image numérique d'un modèle enregistrée en mémoire, ces coordonnées étant respectivement associées à un repère spatial relatif à l'image et une table colorimétrique enregistrés dans un espace mémoire du système informatique (0),
b. une étape de création, par les moyens de traitement, d'au moins une liste de points (5) de mêmes coordonnées colorimétriques, les données relatives à au moins cette liste étant enregistrées en mémoire par les moyens d'enregistrement des données,
c. une étape de création, par les moyens de traitement, d'au moins un groupe de points (5) d'une même liste de points de mêmes coordonnées colorimétriques et dont chaque point (5) appartenant audit groupe doit être situé à une distance inférieure à une distance d/2 d'un point (5) d'un autre groupe, la distance d enregistrée en mémoire correspondant à la distance minimale entre deux groupes de points (5),
d. une étape de filtrage et de suppression des groupes dont le nombre de points (5) est inférieur à une valeur limite enregistrée dans une zone mémoire du système informatique,
e. une étape de vectorisation, par les moyens de traitement, d'au moins un groupe de points (5), suivi de l'enregistrement en mémoire par les moyens d'enregistrement des coordonnées d'au moins un vecteur (50) correspondant,
f. une étape d'association, via les moyens de traitement, de chaque vecteur (50) à la tête d'impression (1a, 10a, 1 b, 10b, 1c, 1 d) correspondante, une base de données associant chaque tête d'impression (1a, 10a, 1 b, 10b, 1 c, 1 d) à une coordonnée colorimétrique étant enregistrée en mémoire,
g. une étape de comparaison à l'aide des moyens de traitement des coordonnées des vecteurs (50) avec les coordonnées des vecteurs optimaux respectifs enregistrés en mémoire et caractérisant un alignement optimal des têtes (1 a, 10a, 1 b, 10b, 1 c, 1 d).

2. Procédé selon les revendications précédentes, **caractérisé en ce qu'**un point (5) est le plus petit élément de teinte homogène, ou pixel, de l'image du modèle enregistré.

3. Procédé selon les revendications précédentes, **caractérisé en ce que** seuls les points (5), dont les coordonnées colorimétriques sont associées via les moyens de traitement à une portion réduite de la table colorimétrique, sont intégrés dans au moins une des listes créées à l'étape b, ladite portion réduite étant enregistrée dans un espace mémoire du système informatique (0).

4. Procédé selon les revendications précédentes, **caractérisé en ce qu'**une étape supplémentaire de suppression des points (5) d'une goutte (4) dont le nombre de points (5) est inférieur à une valeur pouvant être choisie par l'utilisateur et enregistrée en mémoire, est réalisé via les moyens de traitement juste avant l'étape e du procédé.

5. Procédé selon la revendication 1, **caractérisé en ce que** la valeur de la distance d est choisie et enregistrée en mémoire par un utilisateur via des moyens de saisie associé au système informatique (0).

6. Procédé selon les revendications précédentes, **caractérisé en ce que** les groupes de points (5) sont vectorisés par les moyens de traitement suivant la méthode des moindres carrés.

7. Procédé selon la revendication précédente, **caractérisé en ce que** chaque groupe de points (5) est ajusté par une fonction affine de telle sorte que la somme des carrés des écarts des coordonnées suivant la direction parallèle au sens d'impression (y) de chaque point (5) par rapport à la fonction affine d'ajustement est minimale.

8. Méthode d'alignement d'au moins une tête d'impression (1 a, 10a, 1 b, 10b, 1 c, 1 d) installée sur une machine d'impression, la position de chaque tête (1 a, 10a, 1 b, 10b, 1 c, 1 d) pouvant être ajustée à l'aide de moyens de réglage dans un plan parallèle au substrat (2), chaque tête comprenant une pluralité de buses, la machine d'impression comprenant notamment un moyen de déplacement du substrat, des moyens de mesure (20) de la vitesse instantanée du substrat en déplacement, des moyens informatiques (0) de gestion des opérations d'impression et d'alignement, les moyens informatiques comprenant au moins une zone mémoire, des moyens d'acquisition, d'enregistrement et de traitement des données, la méthode étant **caractérisée en ce qu'**elle comprend :
a. une étape de création - (61) par les moyens de traitement informatique et d'enregistrement par les moyens d'enregistrement dans une zone - mémoire du système informatique (0), d'un modèle numérique utilisable pour l'alignement des têtes d'impression (1 a, 10a, 1b, 10b, 1 c, 1 d),
b. une étape d'impression (62) dudit modèle avec la machine d'impression sur la base du modèle créé par les moyens de traitement et enregistré en mémoire, le modèle comprenant au moins un motif (40, 41), chaque motif étant composé d'une pluralité de gouttes d'impression (4),
c. une étape de numérisation (63) du modèle imprimé par les moyens d'acquisition commandés par les moyens de traitement du système informatique (0), suivi de l'enregistrement en mémoire par les moyens d'enregistrement de l'image du modèle acquis,
d. une étape de vectorisation (7, 8, 9) des motifs (40, 41) de l'image selon la revendication 1, les vecteurs (50) créés regroupant des points (5) ayant notamment les mêmes coordonnées colorimétriques,
e. une étape de génération (69) par les moyens de traitement et d'enregistrement par les moyens d'enregistrement dans une zone mémoire du système informatique (0), d'un fichier de configuration de l'alignement d'au moins une tête d'impression (1 a, 10a, 1 b, 10b,1c, 1 d) réalisé sur la base des résultats obtenus à l'étape précédente.

9. Méthode d'alignement selon la revendication précédente, **caractérisée en ce que** la machine d'impression comprend, indépendamment du moyen de déplacement, un moyen de détection (3) des bords du substrat perpendiculaire au déplacement, de manière à ce que les moyens de traitement déclenche l'impression d'au moins une tête d'impression (1a, 10a, 1 b, 10b, 1 c, 1d) au moment opportun afin de réaliser l'impression d'un modèle, la vitesse instantanée de déplacement du substrat étant connue à chaque instant et la distance optimale entre le moyen de détection (3) et chaque tête d'impression (1 a, 10a, 1 b, 10b, 1 c, 1d) étant enregistrée dans une zone mémoire du système informatique (0).

10. Méthode d'alignement selon la revendication 8, **caractérisée en ce qu'**une étape d'affichage de données de configuration de l'alignement d'au moins une tête d'impression (1 a, 10a, 1 b, 10b, 1 c, 1 d) est réalisé parallèlement à la génération du fichier de configuration, via des moyens d'affichage compris dans les moyens informatiques (0).

11. Méthode d'alignement selon les revendications 8 à 10, **caractérisée en ce que** les moyens de réglage des têtes (1 a, 10a, 1 b, 10b, 1 c, 1 d) permettent de modifier la position des têtes (1 a, 10a, 1 b, 10b, 1 c, 1 d) selon deux directions linéaires respectivement perpendiculaire (x) et parallèle (y) au sens d'impression, et selon une direction angulaire dans un plan parallèle au substrat.

12. Méthode d'alignement selon les revendications 8 à 11, **caractérisée en ce que** le modèle imprimé comprend d'une part au moins un motif (40a, 40b, 40c) sensiblement perpendiculaire au sens d'impression, chaque motif (40a, 40b, 40c) étant réalisé par l'ensemble ou une partie des buses de chaque tête d'impression, et d'autre part au moins un motif (41a, 41b, 41 c) sensiblement parallèle au sens d'impression, chaque motif (41 a, 41 b, 41 c) étant réalisé par la même buse d'une tête d'impression (1 a, 10a, 1b, 10b, 1 c, 1d), les motifs perpendiculaires au sens d'impression permettant de vérifier l'alignement angulaire des têtes (1 a, 10a, 1 b, 10b, 1 c, 1 d) et l'alignement des têtes selon la direction parallèle au sens d'impression, les motifs parallèles au sens d'impression permettant de vérifier l'alignement des têtes (1 a, 10a, 1 b, 10b, 1 c, 1 d) selon la direction perpendiculaire au sens d'impression.

13. Méthode d'alignement selon les revendications 8 à 12, **caractérisé en ce que** les moyens d'acquisition des données comprennent un capteur d'image 2D dont la résolution est comprise entre 0.1 et 100 megapixels, préférentiellement autour de 6 mégapixels.

14. Méthode d'alignement selon les revendications 8 à 13, **caractérisé en ce que** les moyens d'acquisition des données comprennent un capteur d'image linéaire fixé sur la machine d'impression et relié aux moyens de mesure de la vitesse instantanée (20) du substrat (2), et dont le champ de vision est au moins aussi large que le modèle imprimé sur le substrat (2), ledit capteur étant contrôlé par les moyens informatiques (0) de manière à numériser l'ensemble des motifs (40, 41) imprimés sur le substrat (2), la position du substrat (2) étant connu à chaque instant grâce aux moyens de mesure de la vitesse instantanée (20) dudit substrat (2).

15. Méthode d'alignement selon les revendications 8 à 14, **caractérisée en ce qu'**une étape d'étalonnage par les moyens d'acquisition et de traitement précède l'étape de numérisation du modèle.

## Patentansprüche

1. Verfahren zum Prüfen der Ausrichtung wenigstens eines auf einer Druckmaschine installierten Druckkopfs (1 a, 10a, 1 b, 10b, 1 c, 1d) durch lineares Justieren von wenigstens einer Gruppe von Punkten (5), die auf einem Bild infolge der Digitalisierung eines Modells dargestellt sind, das eine Vielzahl von gedruckten Tropfen (4) umfasst, **dadurch gekennzeichnet, dass** jeder Tropfen (4) eine Vielzahl von Punkten (5) umfasst, wobei jeder Punkt (5) mit einem gleichförmigen Farbton einer kolorimetrischen Datenbank entspricht, die in einer Speicherzone eines Informatiksystems (0) abgespeichert ist, das das Verfahren ausführt und Folgendes umfasst: wenigstens einen Speicherplatz, Datenerfassungs-, -aufzeichnungs- und -verarbeitungsmittel, wobei das Verfahren Folgendes umfasst:
a) einen Schritt des Erkennens der Farbe der Punkte (5) durch die Verarbeitungsmittel, gefolgt von der Zuordnung, durch die Verarbeitungsmittel, von räumlichen Koordinaten und kolorimetrischen Koordinaten zu jedem Punkt (5) eines digitalen Bildes eines im Speicher aufgezeichneten Modells, wobei diese Koordinaten jeweils mit einem räumlichen Bezugspunkt relativ zu dem Bild und einer kolorimetrischen Tabelle assoziiert sind, die in einem Speicherraum des Informatiksystems (0) aufgezeichnet ist,
b) einen Schritt des Erzeugens, durch die Verarbeitungsmittel, von wenigstens einer Liste von Punkten (5) mit denselben kolorimetrischen Koordinaten, wobei die Daten in Bezug auf wenigstens diese Liste im Speicher durch Datenaufzeichnungsmittel aufgezeichnet werden,
c) einen Schritt des Erzeugens, durch die Verarbeitungsmittel, von wenigstens einer Gruppe von Punkten (5) einer selben Punktliste mit denselben kolorimetrischen Koordinaten, wobei sich jeder zu der genannten Gruppe gehörende Punkt (5) in einer Distanz befinden muss, die kleiner ist als eine Distanz d/2 eines Punkts (5) einer anderen Gruppe, wobei die im Speicher aufgezeichnete Distanz d der Mindestdistanz zwischen zwei Gruppen von Punkten (5) entspricht,
d) einen Schritt des Filterns und Unterdrückens von Gruppen, deren Anzahl von Punkten (5) kleiner ist als ein in einer Speicherzone des Informatiksystems aufgezeichneter Grenzwert,
e) einen Schritt des Vektorisierens, durch die Verarbeitungsmittel, von wenigstens einer Gruppe von Punkten (5), gefolgt vom Aufzeichnen von Koordinaten von wenigstens einem entsprechenden Vektor (50) im Speicher durch die Aufzeichnungsmittel,
f) einen Schritt des Assoziierens, über die Verarbeitungsmittel, jedes Vektors (50) mit dem entsprechenden Druckkopf (1a, 10a, 1b, 10b, 1c, 1d), wobei eine Datenbank jeden Druckkopf (1a, 10a, 1b, 10b, 1c, 1d) mit einer im Speicher aufgezeichneten kolorimetrischen Koordinate assoziiert,
g) einen Schritt des Vergleichens, mit Hilfe der Verarbeitungsmittel, von Koordinaten der Vektoren (50) mit den Koordinaten der jeweiligen optimalen Vektoren, die im Speicher aufgezeichnet sind und eine optimale Ausrichtung der Köpfe (1a, 10a, 1 b, 10b, 1 c, 1 d) charakterisieren.

2. Verfahren nach dem vorherigen Anspruch, **dadurch gekennzeichnet, dass** ein Punkt (5) das kleinste Element des homogenen Farbtons, oder Pixels, des Bildes des aufgezeichneten Modells ist.

3. Verfahren nach einem der vorherigen Ansprüche, **dadurch gekennzeichnet, dass** nur die Punkte (5), deren kolorimetrische Koordinaten über die Verarbeitungsmittel mit einem reduzierten Teil der kolorimetrischen Tabelle assoziiert sind, in wenigstens einer der in Schritt b erzeugten Listen integriert sind, wobei der reduzierte Teil in einem Speicherraum des Informatiksystems (0) aufgezeichnet ist.

4. Verfahren nach den vorherigen Ansprüchen, **dadurch gekennzeichnet, dass** ein ergänzender Schritt des Unterdrückens der Punkte (5) eines Tropfens (4), dessen Anzahl von Punkten (5) kleiner ist als ein Wert, der vom Benutzer gewählt werden kann und im Speicher aufgezeichnet ist, über die Verarbeitungsmittel unmittelbar vor Schritt e des Verfahrens realisiert wird.

5. Verfahren nach Anspruch 1, **dadurch gekennzeichnet, dass** der Wert der Distanz d von einem Benutzer gewählt und im Speicher über mit dem Informatiksystem (0) assoziierte Erfassungsmittel aufgezeichnet wird.

6. Verfahren nach den vorherigen Ansprüchen, **dadurch gekennzeichnet, dass** die Gruppen von Punkten (5) von den Verarbeitungsmitteln gemäß der Kleinste-Quadrate-Methode vektorisiert werden.

7. Verfahren nach dem vorherigen Anspruch, **dadurch gekennzeichnet, dass** jede Gruppe von Punkten (5) für eine affine Funktion justiert wird, so dass die Summe der Quadrate der Abstände der Koordinaten gemäß der Richtung parallel zur Druckorientierung (y) jedes Punkts (5) in Bezug auf die affine Funktion des Justierens minimal ist.

8. Verfahren zum Ausrichten wenigstens eines auf einer Druckmaschine installierten Druckkopfs (1a, 10a, 1b, 10b, 1c, 1d), wobei die Position jedes Kopfes (1 a, 10a, 1 b, 10b, 1 c, 1 d) mit Hilfe von Reguliermitteln in einer Ebene parallel zu dem Substrat (2) justiert werden kann, wobei jeder Kopf eine Vielzahl an Düsen umfasst, wobei die Druckmaschine insbesondere Folgendes umfasst:
ein Mittel zum Bewegen des Substrats, Mittel (20) zum Messen der momentanen Geschwindigkeit des Substrats bei der Bewegung, Informatikmittel (0) zum Steuern der Druck- und Ausrichtungsvorgänge, Informatikmittel, die wenigstens eine Speicherzone, Datenerfassungs-, -aufzeichnungs- und -verarbeitungsmittel umfassen, wobei das Verfahren **dadurch gekennzeichnet ist, dass** es Folgendes umfasst:
a) einen Schritt (61) des Erzeugens, durch die Informatikverarbeitungsmittel, und des Aufzeichnens, durch die Aufzeichnungsmittel, eines digitalen Modells, das zum Ausrichten der Druckköpfe (1a, 10a, 1b, 10b, 1c, 1d) benutzt werden kann, in einer Speicherzone des Informatiksystems (0),
b) einen Schritt (62) des Druckens des Modells mit der Druckmaschine auf der Basis des von den Verarbeitungsmitteln erzeugten und im Speicher aufgezeichneten Modells, wobei das Modell wenigstens ein Motiv (40, 41) umfasst, wobei sich jedes Motiv aus einer Mehrzahl von Drucktropfen (4) zusammensetzt,
c) einen Schritt (63) des Digitalisierens des von den Erfassungsmitteln gedruckten Modells, gesteuert durch die Verarbeitungsmittel des Informationssystems (0), gefolgt vom Aufzeichnen des Bildes des erfassten Modells im Speicher durch die Aufzeichnungsmittel,
d) einen Schritt (7, 8, 9) des Vektorisierens der Motive (40, 41) des Bildes nach Anspruch 1, wobei die erzeugten Vektoren (50) Punkte (5) gruppieren, die insbesondere dieselben kolorimetrischen Koordinaten haben,
e) einen Schritt (69) des Erzeugens, durch die Verarbeitungs- und Aufzeichnungsmittel, in einer Speicherzone des Informatiksystems (0), einer Konfigurationsdatei der Ausrichtung von wenigstens einem Druckkopf (1 a, 10a, 1b, 10b, 1c, 1d), realisiert auf der Basis der im vorherigen Schritt erhaltenen Ergebnisse.

9. Verfahren zum Ausrichten nach dem vorherigen Anspruch, **dadurch gekennzeichnet, dass** die Druckmaschine, unabhängig von dem Bewegungsmittel, ein Mittel (3) zum Erkennen von Rändern des Substrats lotrecht zur Bewegung umfasst, auf eine solche Weise, dass die Verarbeitungsmittel das Drucken von wenigstens einem Druckkopf (1a, 10a, 1b, 10b, 1 c, 1 d) im richtigen Moment auslösen, um das Drucken eines Modells zu realisieren, wobei die momentane Bewegungsgeschwindigkeit des Substrats zu jedem Zeitpunkt bekannt ist und die optimale Distanz zwischen dem Erkennungsmittel (3) und jedem Druckkopf (1a, 10a, 1b, 10b, 1c, 1d) in einer Speicherzone des Informatiksystems (0) aufgezeichnet ist.

10. Ausrichtungsverfahren nach Anspruch 8, **dadurch gekennzeichnet, dass** ein Schritt des Anzeigens von Konfigurationsdaten der Ausrichtung von wenigstens einem Druckkopf (1a, 10a, 1b, 10b, 1c, 1d) parallel zur Erzeugung der Konfigurationsdatei über in den Informatikmitteln (0) enthaltene Anzeigemittel realisiert wird.

11. Ausrichtungsverfahren nach den Ansprüchen 8 bis 10, **dadurch gekennzeichnet, dass** die Mittel zum Regulieren der Köpfe (1 a, 10a, 1 b, 10b, 1 c, 1d) das Modifizieren der Position der Köpfe (1a, 10a, 1b, 10b, 1c, 1d) in zwei linearen Richtungen jeweils senkrecht (x) und parallel (y) zur Druckorientierung und gemäß einer winkelmäßigen Richtung in einer Ebene parallel zum Substrat zulassen.

12. Ausrichtungsverfahren nach den Ansprüchen 8 bis 11, **dadurch gekennzeichnet, dass** das gedruckte Modell einerseits wenigstens ein Motiv (40a, 40b, 40c) im Wesentlichen senkrecht zur Druckorientierung, wobei jedes Motiv (40a, 40b, 40c) durch alle oder einige der Düsen jedes Druckkopfs realisiert wird, und andererseits wenigstens ein Motiv (41a, 41b, 41c) im Wesentlichen parallel zur Druckorientierung umfasst, wobei jedes Motiv (41a, 41b, 41c) durch dieselbe Düse eines Druckkopfs (1a, 10a, 1b, 10b, 1c, 1d) realisiert wird, wobei die Motive senkrecht zur Druckorientierung die Überprüfung der Winkelausrichtung der Köpfe (1a, 10a, 1b, 10b, 1c, 1d) und der Ausrichtung der Köpfe gemäß der Richtung parallel zur Druckorientierung ermöglichen, wobei die Motive parallel zur Druckorientierung das Überprüfen der Ausrichtung der Köpfe (1a, 10a, 1b, 10b, 1c, 1d) in der Richtung senkrecht zur Druckorientierung ermöglichen.

13. Ausrichtungsverfahren nach den Ansprüchen 8 bis 12, **dadurch gekennzeichnet, dass** die Datenerfassungsmittel einen 2D-Bildsensor umfassen, dessen Auflösung zwischen 0,1 und 100 Megapixel liegt, vorzugsweise um 6 Megapixel.

14. Ausrichtungsverfahren nach den Ansprüchen 8 bis 13, **dadurch gekennzeichnet, dass** die Datenerfassungsmittel einen linearen Bildsensor umfassen, der an der Druckmaschine befestigt und mit den Mitteln zum Messen der momentanen Geschwindigkeit (20) des Substrats (2) verbunden ist und dessen Sichtfeld wenigstens genauso groß ist wie das gedruckte Modell auf dem Substrat (2), wobei der Sensor von den Informatikmitteln (0) gesteuert wird, um den Satz von auf dem Substrat (2) gedruckten Motiven (40, 41) zu digitalisieren, wobei die Position des Substrats (2) zu jedem Augenblick dank der Mittel zum Messen der momentanen Geschwindigkeit (20) des Substrats (2) bekannt ist.

15. Ausrichtungsverfahren nach den Ansprüchen 8 bis 14, **dadurch gekennzeichnet, dass** ein Schritt des Kalibrierens durch die Erfassungs- und Verarbeitungsmittel dem Schritt des Digitalisierens des Modells vorangeht.

## Claims

1. Method for verification of the alignment of at least one print head (1a, 10a, 1b, 10b, 1c, 1d) installed in a printing machine, by linear adjustment of at least one group of dots (5) shown in an image produced by digitisation of a pattern comprising a plurality of printed drops (4), **characterised in that** each drop (4) has a plurality of dots (5), each dot (5) having a uniform colour in conformity with a colorimetric data base saved in a memory zone of a computer system (0) implementing the method and comprising at least one memory space, means for acquisition, for recording and for processing of the data, the method comprising:
a. a step for detection of the colour of the dots (5) by the processing means, followed by the allocation by the processing means of spatial coordinates and colorimetric coordinates to each dot (5) of a digital image of a pattern recorded in memory, these coordinates being associated respectively with a spatial mark relating to the image and a colorimetric table recorded in a memory space of the computer system (0),
b. a step for creation, by the processing means, of at least one list of dots (5) having the same colorimetric coordinates, the data relating to at least this list being recorded in memory by the means for recording the data,
c. a step for creation, by the processing means, of at least one group of dots (5) from a same list of dots having the same colorimetric coordinates and each dot (5) of which belonging to said group has to be located a distance less than a distance d/2 from a dot (5) of another group, the distance d recorded in memory corresponding to the minimum distance between two groups of dots (5),
d. a step for filtering and elimination of the groups the number of dots (5) of which is less than a limit value recorded in a memory zone of the computer system,
e. a step for vectorisation, by the processing means, of at least one group of dots (5), followed by the recording in memory by the recording means of the coordinates of at least one corresponding vector (50),
f. a step for association, via the processing means, of each vector (50) with the corresponding print head (1a, 10a, 1b, 10b, 1c, 1d), a data base associating each print head (1a, 10a, 1b, 10b, 1c, 1d) with a colorimetric coordinate being recorded in memory,
g. a step for comparison with the aid of the processing means of the coordinates of the vectors (50) with the coordinates of the respective optimum vectors recorded in memory and characterising an optimum alignment of the heads (1a, 10a, 1b, 10b, 1c, 1d).

2. Method according to the preceding claim, **characterised in that** a dot (5) is the smallest element of homogenous colour, or pixel, of the image of the recorded pattern.

3. Method according to the preceding claims, **characterised in that** only the dots (5) the colorimetric coordinates of which are associated via the processing means with a reduced portion of the colorimetric table are integrated in at least one of the lists created in the step b, said reduced portion being recorded in a memory space of the computer system (0).

4. Method according to the preceding claims, **characterised in that** a supplementary step for elimination of the dots (5) of a drop (4) the number of dots (5) of which is less than a value which can be chosen by the user and recorded in memory, is carried out via the processing means just before the step e of the method.

5. Method according to claim 1, **characterised in that** the value of the distance d is chosen and recorded in memory by a user via inputting means associated with the computer system (0).

6. Method according to the preceding claims, **characterised in that** the groups of dots (5) are vectorised by the processing means according to the method of least squares.

7. Method according to the preceding claim, **characterised in that** each group of dots (5) is adjusted by a related function so that the sum of the squares of the differences of the coordinates in the direction parallel to the direction of printing (y) of each dot (5) in relation to the related adjustment function is minimale.

8. Method for alignment of at least one print head (1a, 10a, 1b, 10b, 1c, 1d) installed in a printing machine, the position of each head (1a, 10a, 1b, 10b, 1c, 1d) being adjustable with the aid of means for adjustment in a plane parallel to the substrate (2), each head comprising a plurality of jets, the printing machine comprising in particular a means for moving the substrate, means (20) for measuring the instantaneous speed of the moving substrate, computer means (0) for managing the printing and alignment operations, the computer means comprising at least one memory zone, means for acquisition, for recording and for processing of the data, the method being **characterised in that** it comprises:
a. a step for creation (61) by the computer processing means and for recording by the recording means in a memory zone of the computer system (0) of a digital pattern which can be used for alignment of the print heads (1a, 10a, 1b, 10b, 1c, 1d),
b. a step for printing (62) of said pattern with the printing machine on the basis of the pattern created by the processing means and recorded in memory, the pattern comprising at least one motif (40, 41), each motif being composed of a plurality of printed drops (4),
c. a step for digitisation (63) of the pattern printed by the means for acquisition controlled by the processing means of the computer system (0), followed by the recording in memory by the recording means of the image of the pattern acquired,
d. a step for vectorisation (7, 8, 9) of the motifs (40, 41) of the image according to claim 1, the vectors (50) created grouping dots (5) having in particular the same colorimetric coordinates,
e. a step for generation (69) by the processing means and for recording by the recording means in a memory zone of the computer system (0) of a file for configuration of the alignment of at least one print head (1a, 10a, 1b, 10b, 1c, 1d) produced on the basis of the results obtained in the preceding step.

9. Method for alignment according to the preceding claim, **characterised in that** the printing machine comprises, independently of the means for moving, a means for detection (3) of the edges of the substrate perpendicular to the movement, so that the processing means trigger the printing of at least one print head (1a, 10a, 1b, 10b, 1c, 1d) at the appropriate moment in order to effect the printing of a pattern, the instantaneous speed of movement of the substrate being known at every instant and the optimum distance between the means for detection (3) and each print head (1a, 10a, 1b, 10b, 1c, 1d) being recorded in a memory zone of the computer system (0).

10. Method for alignment according to claim 8, **characterised in that** a step for displaying data for configuration of the alignment of at least one print head (1a, 10a, 1b, 10b, 1c, 1d) is carried out parallel with the generation of the configuration file, via displaying means incorporated in the computer means (0).

11. Method for alignment according to claims 8 to 10, **characterised in that** the means for adjustment of the heads (1a, 10a, 1b, 10b, 1c, 1d) allow the position of the heads (1a, 10a, 1b, 10b, 1c, 1d) to be modified in two linear directions which are respectively perpendicular (x) and parallel (y) to the direction of printing, and in an angular direction in a plane parallel to the substrate.

12. Method for alignment according to claims 8 to 11, **characterised in that** the printed pattern comprises on the one hand at least one motif (40a, 40b, 40c) which is substantially perpendicular to the direction of printing, each motif (40a, 40b, 40c) being produced by all or a part of the jets of each print head, and on the other hand at least one motif (41a, 41b, 41c) which is substantially parallel to the direction of printing, each motif (41a, 41b, 41c) being produced by the same jet of a print head (1a, 10a, 1b, 10b, 1c, 1d), the motifs perpendicular to the direction of printing allowing verification of the angular alignment of the heads (1a, 10a, 1b, 10b, 1c, 1d) and the alignment of the heads in the direction parallel to the direction of printing, the motifs parallel to the direction of printing allowing verification of the alignement of the heads (1a, 10a, 1b, 10b, 1c, 1d) in the direction perpendicular to the direction of printing.

13. Method for alignment according to claims 8 to 12, **characterised in that** the means for acquisition of the data comprise a 2D image detector the resolution of which is between 0.1 and 100 megapixels, preferably around 6 megapixels.

14. Method for alignment according to claims 8 to 13, **characterised in that** the means for acquisition of the data comprise a linear image detector fixed to the printing machine and connected to the means for measuring the instantaneous speed (20) of the substrate (2) and the field of vision of which is at least as wide as the pattern printed on the substrate (2), said detector being controlled by the computer means (0) so as to digitise all the motifs (40, 41) printed on the substrate (2), the position of the substrate (2) being known at every instant by virtue of the means for measuring the instantaneous speed (20) of said substrate (2).

15. Method for alignment according to claims 8 to 14, **characterised in that** a step for calibration by the means for acquisition and processing precedes the step for digitisation of the pattern.
